# EUROPEAN PATENT SPECIFICATION

(11) **EP 2 949 604 B1**
(45) Date of publication and mention of the grant of the patent: **06.09.2017**
(21) Application number: 14170244.9
(22) Date of filing: 28.05.2014
(51) Int. Cl.: B65G 1/04, B65G 1/137, B65G 1/06

(54) **METHOD OF COMMISSIONING IN A STORAGE FACILITY HAVING A PLURALITY OF LIFTS**
KOMMISSIONIERUNGSVERFAHREN MIT MEHREREN AUSLAGERLIFTEN IN EINER LAGERANLAGE
MÉTHODE DE PRÉPARATION DE COMMANDE UTILISANT PLUSIEURS ÉLÉVATEURS DANS UN ENTREPÔT DE STOCKAGE

(43) Date of publication of application: 02.12.2015
(73) Proprietor: Dematic GmbH, 63150 Heusenstamm (DE)
(72) Inventor: Dudek, Christopher, 63533 Mainhausen (DE); Meurer, Hans Christoph, 64380 Roßdorf (DE)
(74) Representative: Moser Götze & Partner Patentanwälte mbB

(56) References cited:
- EP-A1- 1 462 393
- EP-A1- 2 287 093
- EP-B1- 1 964 792
- DE-A1-102006 025 620
- DE-A1-102011 012 424
- DE-A1-102012 107 176
- DE-U1- 20 211 321
- US-A1- 2003 093 176
- US-A1- 2009 136 328

## Description

The invention relates to a method in accordance with the preamble of claim 1.

When picking or compiling orders from transporting units, such as e.g. articles or containers, it is necessary to provide the transporting or storage units, which are associated with a common order, in a directed or sorted fashion. In addition, it is conventional to intermediately store (buffer) the transporting units of an order, until all of the transporting units required for the order are present. They are then passed together onto a collecting line which leads them e.g. to the palletization area, picking station, goods issue, shipment etc.

In the picking station the goods for fulfilling an order are taken from the transporting or storage units and placed according to the order into an order container etc. The storage container (often called donor) is then routed back into the racking storage and stored until needed for the next order.

A (high bay) racking storage facility includes a storage-entry area, via which the goods are supplied to and from which the Automatic Storage and Retrieval Machine (hereafter called AS/RS) collects the goods for placement in storage, the so-called front-zone. In a similar manner, a retrieval area is required, at which after retrieval from storage the AS/RS deposit the goods which are likewise assigned to the front-zone. In the case of automatic picking storage facilities, picking locations are typically situated in the front-zone. In the front-zone, the goods are also identified for the inventory management system or the material flow computer.

EP 1 964 792 B1 by the present applicant discloses a method of making transporting units available from a storage facility on at least one collecting line. AS/RS in each storage racking aisle, retrieval-from-storage and outbound lines are controlled, in such a way as to be matched and coordinated to one another, and are loaded with goods that ultimately they end up on, or are discharged from, the collecting line in a sorted fashion.

The control and matching are thus relatively complex and require evident technical work in the so-called front-zone, i.e. the area outside the actual racking, which is necessary to achieve high trough put and sequencing.
The applicants own filing DE 10 2012 107 176 A1 discloses a method of inter changing units within the rack itself by means of the load handling means (shuttles) according to the preamble of claim 1, such that the units must not be retrieved and rerouted through the front zone. Essentially the units are pushed through adjacent racks from a rack of the first aisle into the adjacent rack of the next aisle where a second load handling means may retrieve the unit if needed, whereby most of the front zone functions become obsolete. However this so-called inter-aisle-transfer is obviously only possible for adjacent or abutting racks and the outermost racks of a storage do not share such a function. This leads to an unbalanced load of the shuttles throughout the storage which is unwanted as the picking stations downstream are based upon uniform supply of goods per aisle to achieve maximum throughput.

Additionally, in very large high bay racking storage facilities the utilization of the space is often difficult, because there is a maximum height of storage racking that should not be exceeded when using shuttle systems. However this goes together with having two separate systems that need a duplicate warehouse or inventory tracking. It is also difficult to optimize the storage locations of the articles in the separate systems, which leads to the need for larger storage racking to account for duplicate storage of articles in the two systems.
In contrast thereto, the object of the invention is to provide a method of making storage units available from a storage facility, which provides balanced shuttle load over all aisles of a high bay storage. And at the same time to also provides means for high throughput in high-bay storages independent of their height.
This object is achieved by the method stated in claim 1.

In accordance with the invention, it has been recognized that if the storage racking is vertically divided into at least two sub-storages and has at least one spanning lift connecting all storage levels and both sub-storages, it is possible to equalize or balance the shuttle loads over all aisles and at the same time allow for better use of vertical space without losing storage capacity or needing further inventory tracking.

This allows for optimal use of the throughput of the whole system and also shortens the longest possible path between aisles.
This is especially the case if the spanning lifts are arranged at least in the outermost racks not having cross conveyance locations. According to the invention, the spanning lifts are installed over the whole height and all levels of the storage racking and therefore connect all levels of both sub-storages. In contrast the storage lifts are only used for each sub-storage and are preferably used for feeding/discharging the picking stations.
However the spanning lifts may additionally be arranged in further aisles/racks.
It is preferred that each storage lift is directly connected to a picking station for picking from product units into order units for fulfilling orders, to which order and/or product units from the storage racking are fed in a picking level by the storage-entry conveyor and the storage-exit conveyor. Thereby each aisle is linked to a picking station and it is possible to use the balanced shuttle loads for servicing picking stations.

It is further preferred that one storage lift is arranged in each rack of an aisle. This allows to use one lift as an entry-lift (or inbound lift) and the other lift as an exit-lift (or outbound lift). This improves throughput immensely.
Throughput may also be improved if the shuttle and the at least one lift (either storage lift or spanning lift) are decoupled from each other by an inbound-buffer-conveyor and/or an outbound-buffer-conveyor, wherein the buffer-conveyors are arranged within the racks.
It is preferred that the storage lifts are of drive through type, meaning that the units (containers, trays, articles etc.) may pass through the lift itself onto the corresponding buffer, conveyor etc. To be distinguished from this is the so-called drive-by type of lift, which means that the AS/RS devices in the aisle may drive past the lift, i.e. the lift does not hinder the movement of the shuttles within the aisles. The spanning lift and the storage lifts preferably are built/arranged in such a manner.

Preferably two or more storage lifts of a single aisle are connected to the storage-entry conveyor and the storage-exit conveyor. This allows for two storage lifts of a single aisle to be connected to e.g. one picking station or any other materials handling system, preferably on a single level. This simplifies the system and realizes very good throughput.

In the present application the picking stations can be manually operated and either semi- or fully automated order picking stations. A fully automated picking station is defined as a picking station according to the goods-to-person principle with fully automated unit (totes, containers, trays, boxes etc.) handling, i.e. a fully automated supply and discharge and presentation of the product and order units. Empty order units and/or units with commissioning goods are automatically supplied to the work station. Units are placed in ergonomically optimal height on the picking station. Usually such a station will also incorporate means for directing, instructing and controlling as well as supervising the picker (e.g. pick-to-light, optical pointing device, IT display etc.), who will still manually pick out of product units into order units. In contrast a semiautomatic picking station will not have the fully automated unit handling just described, but will involve some manual processing of units.

The picking stations may be orientated such that they face each other and lifts are located between them. It is also possible that two picking stations are connected to two lifts on a single level.

Additionally a picking station may have temporary shelving, e.g. for pre-picking certain articles

Preferably the automatic storage and retrieval device (AS/RS) is fed by an inbound-buffer-conveyor and/or feeds into an outbound-buffer-conveyor, wherein the buffers are arranged within the racking unit. This allows for high performance due to quick relief of the AS/RS.

In accordance with a further aspect of the invention, it has been also recognized that when transporting or storage units are exchanged directly between two adjoining storage racking units from one storage racking aisle to an adjacent storage racking aisle via cross conveyance locations in the storage racking units, distribution and/or complex sorting in the front-zone can be omitted, since the transporting units are already stored in a single storage rack aisle even if initially they were stored elsewhere. When retrieved from storage, they are simply retrieved in sequence within a single aisle. Therefore a direct transfer of the transporting units without distribution or sorting outside of the aisles can be achieved without "crossing" conveyors and this with a simpler and smaller technical installation with smaller space and higher reliability. The transporting or storage units can therefore just be retrieved from the respective aisle in the required sequence.

In other words, storage racking locations of abutting racking units are used for passing transporting or storage units from one side of the racking through to the next, so that the transporting units can be transferred from one racking to the next.

Therefore, cross conveyance or sorting is possible inside the racking units themselves and accordingly it is possible to dispense with or at least minimize "cross conveyance" in the front-zone.

In an expedient manner, the cross conveyance locations are provided in each level or any selected level of the storage racking units.

Particularly effective path-time optimization is achieved if the cross conveyance locations are disposed closer to inbound and outbound buffer conveyors. It is also possible to locate cross conveyance locations at different positions within a level.

The cross conveyance locations can also be used as buffers, especially if they belong to final destination aisle of the transport or storage units, i.e. the transporting or storage units remain therein, until they are actually needed or retrieved.

The exchange can be effected actively or passively with regard to the AS/RS i.e., on the one hand the cross conveyance location can be simply a passive storage surface, on which the AS/RS of one aisle deposits transporting or storage units (quasi places them into storage) and from which the AS/RS of the adjacent aisle receives transporting units (quasi removes them from storage). For each racking storage location or cross conveyance location this procedure can always be performed in one direction only or in both directions.

On the other hand, it is likewise possible to equip the cross conveyance location with corresponding conveyance technology, such as driven rollers, gravity flow track, idler roller, conveyor belts with or without a drive etc. The AS/RS can then deposit the transporting or storage units and the conveyance technology of the cross conveyance location performs transportation. The cross conveyance locations can also be equipped with a push mechanism for the transporting units.

By reason of the simplicity of the cross conveyance locations, it is also possible to subsequently retrofit or refit cross conveyance locations and to adapt flexibly to the level of efficiency required in the storage system.

The cross conveyance locations can thus optionally be configured for bidirectional or unidirectional exchange and/or for active or passive exchange.

The transverse displacement function by means of the cross conveyance locations within the rack offers the advantage that, in the event of a malfunction of e.g. an outbound lift/inbound lift or feeding lines, the function of the relevant aisle can be maintained.

For exchange purposes, the AS/RS can likewise place the transporting units in normal storage, double-depth storage or multiple-depth storage in the cross conveyance location. The AS/RS of one aisle can thus place the transporting or storage units in storage in the cross conveyance locations to such a depth that they are already to be assigned to the adjacent racking and can be reached "normally" by the AS/RS in the adjacent racking.

In addition, the load receiving means, e.g. telescopic arms, can have an extended range.

It is also possible to use a stacked storage of transporting or storage units.

Since the cross conveyance locations are subjected to be utilized extensively and reduce a damage of transport or storage unit, it is expedient if the floors of the cross conveyance locations can be coated to reduce friction and/or structural reinforcement can be effected.

It is thus possible in accordance with the invention to achieve a particularly high level of retrieval efficiency whilst fully maintaining the desired sequence of transporting or storage units in any aisle. This is also achieved with considerably less technical work than in accordance with the Prior Art.

The outbound-buffer-conveyors and inbound-buffer-conveyors may also be located in a rack or alternatively outside of a rack. Alternatively the outbound-buffers are located in or outside of one rack of an aisle and inbound-buffers are located in or outside the other rack of an aisle. Further it is possible to locate the outbound-buffers and/or inbound-buffers in or outside of the racks of an aisle in a per level alternating fashion, i.e. the inbound-buffers are arranged on even levels of a rack and outbound-buffers in the odd levels of the same rack. Under this scenario, the units on a level where the outbound buffer conveyor is missing are always transferred to an adjacent aisle via cross conveyance locations. Likewise, on the level where the inbound buffer conveyor is missing units from an adjacent aisle are received via cross conveyance locations. Obviously it is also possible to not locate buffer conveyors on each and every non-picking level but only every few levels.

For high performance it is preferred that outbound-buffer-conveyors and inbound-buffer-conveyors are located on every level.

The storage-entry conveyor and the storage-exit conveyor should preferably be arranged in the same level, especially the picking level, i.e. the level in which the picking station is located. Alternatively the storage-entry conveyor and the storage-exit conveyor may be arranged in different levels, so that the picking station is supplied on one level and units are dispatched from it on a second level.

It is also possible that each storage-entry and/or exit conveyor level has buffer conveyors directly feeding or fed by storage-entry and/or exit conveyors.

It is understood that where the term "transporting units" or likewise "storage units" is used, it is not to be interpreted as limiting, in fact other types of transport (e.g. trays, pallets etc.) can also be used equally effectively within the scope of the invention. In particular, the term "transporting units" or "storage units" also includes totes, trays, containers, paperboard containers, carton boxes, packaging units, i.e. combined individual articles, etc. and individual articles. These units can either be donor units, from which a picker takes articles for an order, so that these function as a donor (often also called product units), or these units can be order units for collecting articles of an order.

The transporting or storage units can be placed in storage randomly ("chaotically") being distributed over the entire system without knowledge of the subsequent sequence when they are retrieved. In contrast to DE 299 12 230 U1 no restriction as to possible modules or storage areas is required.

It is particularly preferable if the AS/RS are single-level racking serving units. In particular shuttles or satellite vehicles are preferred. Also shuttles with a stacked arrangement of two load handling platforms or an elevating platform are to be used in connection with the invention for handling several levels from a single rail.

It is preferred that the AS/RS machine of the shuttle type is provided per level, as a so-called single-level AS/RS device. However it is also possible to use shuttles equipped with a lifting platform, such that they are able to receive and discharge units not only to the level that they move in but also to levels above and/or below. For example the unit carrying platform with the telescopic arms could be arranged on a lifting device such as a scissor table etc. Such lifting platforms will usually be constructed to service up to four levels of racking. With such a shuttle the lifts need not be loaded and/or discharged at each level and associated buffers etc. need not be arranged on each level, but only on the levels of the shuttle itself, i.e. the levels directly equipped with a shuttle.

In a particular preferred embodiment, so-called Multishuttles® are used as the single-level AS/RS, e.g. so-called Multishuttles®, are used as the AS/RS. The Multishuttle® is a system which can be used universally, is constructed in a modular fashion and combines storage and transportation in an integrated concept. The Multishuttle® supplements the domain of automatic small parts storage facilities as a high-performance, inexpensive and innovative solution. It is a rail-borne vehicle which operates in the racking and serves the entire storage system. The system concept is based upon autonomous rail-guided vehicles for container transportation which operate inside and outside the storage system. A specific load receiving means permits short load-change times and simultaneous loading and unloading. The system has travel rails which are installed in each level of the storage facility or elevated or suspended in the pre-zone. In addition to guiding the vehicles, they also supply voltage thereto.

The shuttle can be used in two arrangements, a so called "captive" or "roaming" arrangement. In the captive arrangement the shuttle stay in their respective level. In the roaming alternative the shuttle change levels as required.

It is favorable if each outbound lift has one or more, in particular two, locations/positions for the transporting or storage units.

Each outbound lift may be connected to several outbound lines. This improves the sorting options and increases the number of orders which can be processed in parallel, or the number of stations which can be supplied.

In the simplest case, the outbound lines are formed as accumulations conveyors. These may include a mechanical device for accumulation, e.g. a movable stop element.

It is also advantageous if each outbound lift has a separately driven conveying means for each location. In particular, it is then expedient if each outbound lift has two locations which are each provided with a separately driven conveying means movable in different directions. Therefore, the transfer of two transporting or storage units for each level (e.g. in a previously standing arrangement) can always be effected simultaneously in different directions or onto different outbound buffers, e.g. to the left and right. In addition, the reception of the transporting units onto the lift is preferably controlled so that the two transporting/storage units are to be discharged onto one level. This is possible on account of the high efficiency of the shuttles used, since the transfer locations (buffer location) to the outbound lift are practically always occupied, so that for the control of the outbound lift there is provided a selection option which allows the lift to be occupied accordingly by transporting/storage units for different outbound buffers of one level.

The system is further characterized by a high degree of flexibility, since the inbound and outbound feeding lines can be connected to the corresponding lifts at any points.

In parallel with the outbound lifts, it is likewise possible to provide dedicated inbound lifts with correspondingly supplying distribution feeding lines. On the other hand, it is also possible to control the outbound lifts such that in addition to the outbound operation they can also be used as inbound lifts. In the reverse scenario, optionally present dedicated inbound lifts can also be used as outbound lifts according to requirement. In the event of malfunctions of individual lifts, this also permits uninterrupted operation or an increase in system efficiency. To this end, the inbound or outbound lines must be disposed between the lift and racking at different heights. This requires the presence of two similar combined inbound and outbound levels, the collecting lines of which are brought together after passing the last outbound line in sequence.

The storage is preferably a fully automated storage.

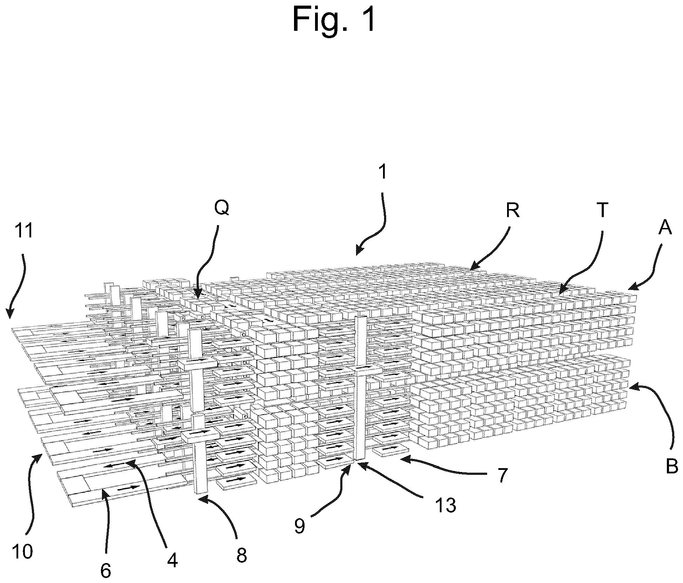

Further features and details of the invention are apparent from the description hereinafter of the drawing, in which
- Figure 1: shows a perspective view of schematic storage facility;

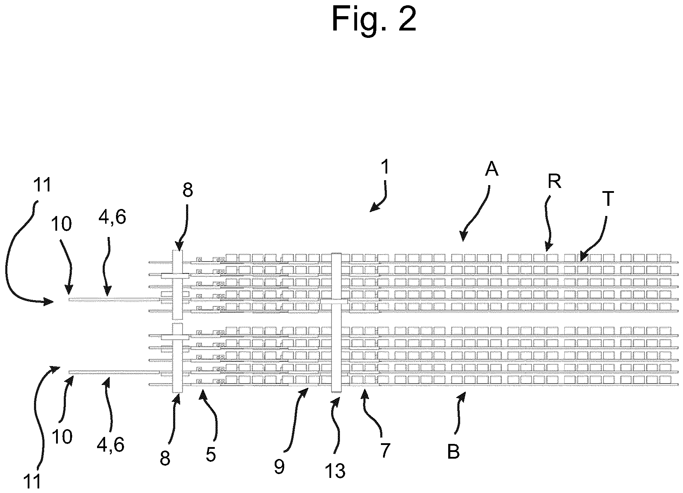

- Figure 2: shows a side view of the storage facility of figure 1 and
- Figure 3: shows a top view of the storage facility of figure 1.

In the figures a storage facility referenced as a whole with numeral 1 is shown, having a plurality of storage racking aisles 2 and storage racking units R having a plurality of levels.

The storage facility 1 is subdivided into two separate sub-storages a first upper storage area A and a second lower storage area B both for transport units T, which can be either of the donor or order type.

The storage racking units R in both sub-storages A, B are disposed in such a manner that the storage racking units R which are not disposed on the outside are each disposed in pairs adjoining one another and have a storage racking aisle 2 on one side.

The storage racking units R located on the inside in each case abut one another "back-to-back".

Every storage racking unit R is provided with a lift 8 having at positions for two units in each case. The lift 8 is positioned at one end of an aisle but within the rack itself, i.e. within its footprint, such that the single level AS/RS 5 (also referred to as shuttles) may pass the lift 8 in the aisle 2 (so-called drive-by configuration).

Each aisle 2 has two lifts 8 one of each is adjoined by an inbound and outbound buffer conveyor 7 and 9 in each storage level, which are disposed between the lift 8 and the storage racking R, in order to decouple the lift 8 from the shuttles 5 which travel in the storage racking aisle 2.

The shuttle 5 travels on a rail 3 of the racking and is fed by an inbound-buffer 7 and feeds into an outbound-buffer 9, wherein both buffers 7, 9 are arranged within the racking unit R directly adjacent the lift 8. In other words the shuttle 5 drop off the units to the buffer 7 or pick up the units from the buffer 9. The buffer 7 feed into the lift 8 and the lift 8 feed out to the buffer 9.

In a picking level 11, picking stations 10 are each connected via a storage-exit-conveyor 4 to the first out-bound storage-lift 8 of an aisle and via a storage-entry conveyor 6 to the second in-bound storage-lift 8 of an aisle 2. Therefore each picking station 10 is directly connected to one aisle 2 only.

The shuttles 5 are provided in each storage racking aisle 2 and in each level of the storage areas A, B. These are thus a so-called "captive" variant, in which the shuttles or satellite vehicles 5 are fixedly allocated to a level and do not change levels or aisles, which theoretically would be possible.

The shuttles 5 include a transport platform for receiving/carrying the respective storage unit T (paperboard container, tray, totes, container, goods without any loading aids, etc.). Disposed in each case to the side on the transport platform are telescopic arms which push the storage unit T off, or pull it onto, the platform. In addition, the telescopic arms are extendible on both sides of the storage racking aisle 2 into the racking units R and have fingers which can be open and close in a known manner.

Particular exchange locations Q for cross-conveyance of units T from one racking R into the adjacent racking R are provided in each level of the storage racking units R, so that the units are exchanged inside the storage racking units R themselves and it is possible to dispense with or at least minimize corresponding work in the pre-zone.

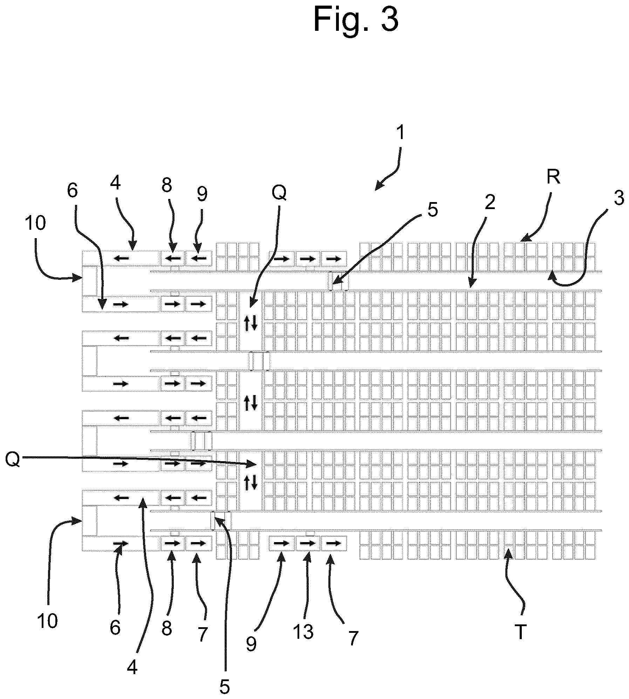

The locations Q for cross-conveyance of units T are located behind the buffers 7, 9 or corresponding positions in the racking units R (see Fig 3). However they may of course also be located at different positions within the racks.

Therefore, the shuttle 5 or the telescopic arms thereof can deposit units T in the cross conveyance locations Q and push them to the corresponding location in the adjacent racking R. For this purpose, the respective unit T is being acted upon by the finger of the telescopic arms beyond a normal rear storage location of one cross conveyance location Q of the first racking R into the respective rear storage location of the adjacent cross conveyance location Q of the adjacent racking R (indicated by arrows). In other words the units are pushed through one rack past the usual storage position into a second adjoining rack. This is shown in Figure 3 for the upper sub-storage A. Obviously lower sub-storage B also has corresponding cross conveyance locations Q in the racking R.

A plurality of cross conveyance locations Q may be provided in each level, so that they do not have to be emptied immediately so operation of neighboring shuttles on the same level can be decoupled.

For the purpose of retrieval the units T are taken from the storage racking R by the shuttle 5 and are discharged onto the retrieval or outbound buffer 9 which conveys the units T further to the lift 8 and thus to the picking station etc.

After picking the unit T is transported back into the corresponding sub-storage via the corresponding lift 8.

The subdivision into two sub-storages A, B above each other allows for good use of the optimal height within the storage facility.

The two sub-storages A, B further allow for balanced use of the shuttles 5 over all aisles 2, even in the outermost aisles without a cross conveyance location Q, as spanning lifts 13 are arranged in the footprint of the outermost racks. The spanning lifts 13 connect all storage levels and both sub-storages A, B.

This allows for optimal use of the throughput of the whole system, i.e. over both sub-storages a And B if needed and also shortens the longest possible path between aisles 2.

For example a longest necessary transfer of a unit T from the outermost aisle of a storage facility with 8 horizontal aisle will need seven transfers via the cross conveyance locations. With the present invention this is shortened to three transfers via the cross conveyance locations Q and one lift transfer via the spanning lift 13.

The spanning lift 13 is also adjoined by an inbound and outbound buffer conveyor 7 and 9 in each storage level, which are disposed between the lift 13 and the storage racking R, in order to decouple the lift 13 from the shuttles 5 which travel in the outermost storage racking aisles 2.

## Claims

1. Method of making order and/or product units (T) available from a storage facility (1) wherein the storage facility comprises:
- a storage racking comprising a plurality of multilevel storage racks (R) in which order and/or product units are stored, wherein the storage racks are disposed in pairs with an aisle in-between and the racks of adjoining pairs are arranged back-to-back;
- at least one automatic storage and retrieval device of the shuttle type provided for each storage racking aisle, wherein the order and/or product units are stored and retrieved from the storage racks by the automatic storage and retrieval device;
- wherein order and/or product units (T) are exchanged directly between two adjoining storage racks (R) from a source storage rack to an adjacent destination storage rack via cross conveyance locations (Q) in the storage racks themselves and the shuttle (5) itself displaces the order and/or product units (T) within the cross conveyance locations (Q);
- at least one storage lift (8) used to transfer the order and/or product units to at least one storage-exit conveyor;
- at least said one storage-exit conveyor per storage lift (8) provided for retrieval of order and/or product units from the storage racking;
- at least one storage-entry conveyor per storage lift (8) provided for feeding order and/or product units into the storage racking;
**characterized in that**
the storage racking is vertically divided into at least two sub-storages (A, B) and has at least one spanning lift (13) connecting all storage levels and both sub-storages and **in that** each storage lift (8) only connects the storage levels of its respective sub-storage.

2. Method as claimed in claim 1, **characterized in that** the spanning lifts (13) are arranged at least in the outermost racks (R) not having cross conveyance locations (Q).

3. Method as claimed in claim 2, **characterized in that** spanning lifts are additionally arranged in further racks (R).

4. Method as claimed in any one of the preceding claims, **characterized in that** each storage lift (8) is directly connected to a picking station (10) for picking from product units into order units for fulfilling orders, to which order and/or product units from the storage racking are fed in a picking level by the storage-entry conveyor (4) and the storage-exit conveyor (6).

5. Method as claimed in any one of the preceding claims, **characterized in that** one storage lift (8) is arranged in each rack (R) of an aisle.

6. Method as claimed in any one of the preceding claims, **characterized in that** the shuttle (5) and the one of at least one storage or spanning lift (8, 13) are decoupled from each other by an inbound-buffer-conveyor (7) and/or an outbound-buffer-conveyor (9), wherein the buffer-conveyors (7, 9) are arranged within the racks (R).

7. Method as claimed in any one of the preceding claims, **characterized in that** by the storage-entry conveyor (4) and the storage-exit conveyor (6) are arranged in the same level.

8. Method as claimed in any one of the preceding claims 1 to 6, **characterized in that** the storage-entry conveyor (4) and the storage-exit conveyor (6) are arranged in different levels.

9. Method as claimed in any one of the preceding claims, **characterized in that** the storage lift (8) is of drive through type.

10. Method as claimed in any one of the preceding claims 1 to 9, **characterized in that** two storage lifts (8) of a single aisle (2) are connected to the storage-entry conveyor (4) and the storage-exit conveyor (6).

## Patentansprüche

1. Verfahren zur Verfügbarmachung von Auftrags- und/oder Produkteinheiten (T) aus einer Lagereinrichtung (1), wobei die Lagereinrichtung Folgendes umfasst:
- eine Lagerregalanlage, die eine Vielzahl von Lagerregalen (R) mit mehreren Ebenen umfasst, in denen Auftrags- und/oder Produkteinheiten gelagert werden, wobei die Lagerregale als Paare mit einem Gang dazwischen angeordnet sind und die Regale angrenzender Paare Rücken an Rücken angeordnet sind;
- mindestens ein automatisches Ein- und Auslagerungsgerät der Shuttle Art, das für jeden Gang der Lagerregalanlage vorgesehen ist, wobei die Auftrags- und/oder Produkteinheiten von dem automatischen Ein- und Auslagerungsgerät in die Lagerregale ein- und daraus ausgelagert werden;
- wobei Auftrags- und/oder Produkteinheiten (T) direkt zwischen zwei angrenzenden Lagerregalen (R) von einem Ausgangslagerregal in ein benachbartes Ziellagerregal über Quertransportplätze (Q) in den Lagerregalen selbst ausgetauscht werden, und das Shuttle (5) selbst die Auftrags- und/oder Produkteinheiten (T) innerhalb der Quertransportplätze (Q) umsetzt;
- mindestens ein Lagerlift (8), der zum Transport der Auftrags- und/oder Produkteinheiten zu mindestens einem Lagerausgangsförderer verwendet wird;
- mindestens einen Lagerausgangsförderer pro Lagerlift (8), der zum Auslagern von Auftrags- und/oder Produkteinheiten aus der Lagerregalanlage vorgesehen ist;
- mindestens einen Lagereingangsförderer pro Lagerlift (8), der zum Befördern von Auftrags- und/oder Produkteinheiten in die Lagerregalanlage vorgesehen ist; **dadurch gekennzeichnet, dass**
die Lagerregalanlage senkrecht in mindestens zwei Lageruntereinheiten (A, B) unterteilt ist und mindestens einen Überbrückungslift (13) aufweist, der sämtliche Lagerebenen und beide Lageruntereinheiten verbindet, und dadurch, dass jeder Lagerlift (8) lediglich die Lagerebenen seiner jeweiligen Lageruntereinheit verbindet.

2. Verfahren nach Anspruch 1, **dadurch gekennzeichnet, dass** die Überbrückungslifte (13) zumindest in den äußersten Regalen (R) angeordnet werden, die keine Quertransportplätze (Q) aufweisen.

3. Verfahren nach Anspruch 2, **dadurch gekennzeichnet, dass** die Überbrückungslifte zusätzlich in weiteren Regalen (R) angeordnet werden.

4. Verfahren nach einem der vorhergehenden Ansprüche, **dadurch gekennzeichnet, dass** jeder Lagerlift (8) unmittelbar mit einer Kommissionierungsstation (10) zum Zusammenstellen von Auftragseinheiten aus Produkteinheiten zur Auftragsabwicklung verbunden wird, zu der Auftrags- und/oder Produkteinheiten aus der Lagerregalanlage in einer Kommissionierungsebene von dem Lagereingangsförderer (4) und dem Lagerausgangsförderer (6) befördert werden.

5. Verfahren nach einem der vorhergehenden Ansprüche, **dadurch gekennzeichnet, dass** ein Lagerlift (8) in jedem Regal (R) eines Gangs angeordnet wird.

6. Verfahren nach einem der vorhergehenden Ansprüche, **dadurch gekennzeichnet, dass** das Shuttle (5) und der eine von zumindest einem Lager- oder Überbrückungslift (8, 13) voneinander durch einen Einlagerpufferförderer (7) und/oder einen Auslagerpufferförderer (9) entkoppelt werden, wobei die Pufferförderer (7, 9) innerhalb der Regale (R) angeordnet werden.

7. Verfahren nach einem der vorhergehenden Ansprüche, **dadurch gekennzeichnet, dass** der Lagereingangsförderer (4) und der Lagerausgangsförderer (6) auf derselben Ebene angeordnet werden.

8. Verfahren nach einem der vorhergehenden Ansprüche 1 bis 6, **dadurch gekennzeichnet, dass** der Lagereingangsförderer (4) und der Lagerausgangsförderer (6) auf unterschiedlichen Ebenen angeordnet werden.

9. Verfahren nach einem der vorhergehenden Ansprüche, **dadurch gekennzeichnet, dass** der Lagerlift (8) ein Durchfahrlift ist.

10. Verfahren nach einem der vorhergehenden Ansprüche 1 bis 9, **dadurch gekennzeichnet, dass** zwei Lagerlifte (8) eines einzigen Gangs (2) mit dem Lagereingangsförderer (4) und dem Lagerausgangsförderer (6) verbunden werden.

## Revendications

1. Procédé de fabrication d'unités de commande et/ou de produit (T) disponibles à partir d'une installation de stockage (1), dans lequel l'installation de stockage comprend:
- un rayonnage de stockage comprenant une pluralité d'étagères (R) de stockage à plusieurs niveaux sur lesquelles des unités de commande et/ou de produit sont stockées, dans lequel les étagères de stockage sont disposées par paires avec une allée entre elles et les étagères de paires adjacentes sont disposées dos à dos;
- au moins un dispositif de stockage et de récupération automatique du type navette prévu pour chaque allée du rayonnage de stockage, dans lequel les unités de commande et/ou de produit sont stockées et récupérées sur les étagères de stockage grâce au dispositif de stockage et de récupération automatique;
- dans lequel les unités de commande et/ou de produit (T) sont échangées directement entre deux étagères (R) de stockage adjacentes d'une étagère de stockage de source à une étagère de stockage de destination adjacente par l'intermédiaire d'emplacements de transport transversaux (Q) formés dans les étagères de stockage elles-mêmes et la navette (5) déplace elle-même les unités de commande et/ou de produit (T) dans les emplacements de transport transversaux (Q);
- au moins un ascenseur de stockage (8) utilisé pour transférer les unités de commande et/ou de produit jusqu'à au moins un convoyeur de déstockage;
- ledit au moins un convoyeur de déstockage par ascenseur de stockage (8) étant prévu pour la récupération d'unités de commande et/ou de produit disposées sur l'étagère de stockage;
- au moins un convoyeur de stockage par ascenseur de stockage (8) prévu pour délivrer les unités de commande et/ou de produit sur les étagères de stockage; **caractérisé en ce que**
l'étagère de stockage est divisée verticalement en au moins deux sous-unités de stockage (A, B) et à au moins un ascenseur de liaison (13) reliant tous les niveaux de stockage et les deux sous-unités de stockage, et **en ce que** chaque ascenseur de stockage (8) ne dessert que les étages de sa sous-unité de stockage respective.

2. Procédé selon la revendication 1, **caractérisé en ce que** les ascenseurs de liaison (13) sont disposés au moins dans les étagères (R) les plus à l'extérieur n'ayant pas d'emplacement de transport transversal (Q).

3. Procédé selon la revendication 2, **caractérisé en ce que** des ascenseurs de liaison sont disposés en plus dans des étagères (R) supplémentaires.

4. Procédé selon l'une quelconque des revendications précédentes, **caractérisé en ce que** chaque ascenseur de stockage (8) est directement relié à une station de prélèvement (10) pour prélever des unités de produit dans des unités de commande pour répondre à des ordres, à laquelle des unités de commande et/ou de produit sont délivrées à un niveau de prélèvement par le convoyeur de stockage (4) et le convoyeur de déstockage (6).

5. Procédé selon l'une quelconque des revendications précédentes, **caractérisé en ce qu'**un ascenseur de stockage (8) est disposé dans chaque étagère (R) d'une allée.

6. Procédé selon l'une quelconque des revendications précédentes, **caractérisé en ce que** la navette (5) et celui de l'au moins un ascenseur de stockage et de liaison (8, 13) sont découplés l'un de l'autre par un convoyeur tampon (7) entrant et/ou un convoyeur tampon (9) sortant, dans lequel les convoyeurs tampons (7, 9) sont disposés au sein des étagères (R).

7. Procédé selon l'une quelconque des revendications précédentes, **caractérisé en ce que** le convoyeur de stockage (4) et le convoyeur de déstockage (6) sont disposés dans le même niveau.

8. Procédé selon l'une quelconque des revendications précédentes 1 à 6, **caractérisé en ce que** le convoyeur de stockage (4) et le convoyeur de déstockage (6) sont disposés dans différents niveaux.

9. Procédé selon l'une quelconque des revendications précédentes, **caractérisé en ce que** l'ascenseur de stockage (8) est de type à entraînement.

10. Procédé selon l'une quelconque des revendications précédentes 1 à 9, **caractérisé en ce que** deux ascenseurs de stockage (8) d'une seule allée(2) sont reliés au convoyeur de stockage (4) et au convoyeur de déstockage (6).
